# FASCICULE DE BREVET EUROPEEN

(11) **EP 3 353 646 B1**
(45) Date de publication et mention de la délivrance du brevet: **30.10.2019**
(21) Numéro de dépôt: 16775609.7
(22) Date de dépôt: 23.09.2016
(51) Int. Cl.: G06F 7/58, H03K 3/84, G06F 1/04

(54) **GENERATEUR D'HORLOGE ALEATOIRE**
ZUFALLSGENERATOR FÜR UHR
RANDOM CLOCK GENERATOR

(30) Priorité: 25.09.2015 EP 15306497
(43) Date de publication de la demande: 01.08.2018
(73) Titulaire: Thales Dis France SA, 92190 Meudon (FR)
(72) Inventeur: LOUBET MOUNDI, Philippe, 92190 Meudon (FR); COULON, Jean-Roch, 92190 Meudon (FR); PEREZ CHAMORRO, Jorge Ernesto, 92190 Meudon (FR)
(74) Mandataire: Bricks, Amélie
(86) Numéro de dépôt international: PCT/EP2016/072747
(87) Numéro de publication internationale: WO 2017/050999

(56) Documents cités:
- US-A- 5 404 402
- US-A1- 2004 114 761
- OLIVER KÖMMERLING ADVANCED DIGITAL SECURITY RESEARCH: "Design Principles for Tamper-Resistant Smartcard Processors", USENIX,, 14 avril 1999 (1999-04-14), pages 1-13, XP061012603,

## Description

L'invention se rapporte à un générateur aléatoire de signal d'horloge. Ce type de générateur est utilisé pour cadencer des processeurs dont on souhaite éviter une synchronisation avec un dispositif externe.

Pour pouvoir garantir un certain niveau de sécurité dans les communications et transactions électroniques, il est connu d'utiliser des échanges d'informations encryptées. Afin de garantir la confidentialité des clefs utilisées, il est courant d'avoir recours à des circuits intégrés sécurisé communément appeler Eléments Sécurisés ou SE (de l'anglais Secure Element). Les SE sont couramment utilisés dans les cartes à puces, clef USB ou autre dispositif portable de sécurisation, ou même intégré dans des dispositifs plus gros tels que des ordinateurs ou des téléphones portables.

Ces SE disposent de nombreux éléments de sécurité pour conserver la confidentialité des informations qu'ils contiennent. A cet effet, il est connu d'identifier les attaques qui peuvent être utilisées pour extraire des informations confidentielles et d'intégrer des moyens de contre mesure dans le SE pour contrer chaque type d'attaque. Parmi les différentes attaques, il est connu d'espionner le courant consommé par le circuit ou son rayonnement électromagnétique afin de déterminer quel algorithme est en train de se dérouler. En outre une synchronisation sur le signal d'horloge permet d'introduire des fautes pour voir comment réagit l'algorithme et déduire certaines valeurs en fonction de la signature en courant. Parmi les contre mesure connues, il est connu de désynchroniser le signal d'horloge en utilisant des générateurs de signal d'horloge utilisant une composante de type pseudo-aléatoire ou aléatoire afin de complexifier l'analyse des signaux mesurés.

Un générateur pseudo-aléatoire permet de masquer en partie le signal d'horloge. Cependant un générateur pseudo-aléatoire reste répétitif et donc prédictible au bout d'un certain temps.

Un générateur d'horloge purement aléatoire présente comme inconvénient majeur d'être trop imprévisible et donc parfois de fournir une horloge beaucoup trop lente pour l'usage demandé.

Actuellement, il n'existe pas de générateur idéal pour fournir un signal d'horloge aléatoire.

L'invention propose un générateur d'horloge aléatoire qui comporte une entrée de signal d'horloge recevant un signal d'horloge maître constitué d'une série d'impulsions régulières et régulièrement espacées, et un circuit réducteur de signal d'horloge recevant d'une part le signal d'horloge maître et d'autre part un nombre entier N et fournissant un signal de sortie correspondant à un train de N impulsions toutes les M impulsions d'horloges, M étant un nombre entier supérieur à 1 et N étant un nombre entier supérieur à 1 et inférieur ou égal à M. En outre, un générateur de nombre fournit un nouveau nombre N au circuit réducteur de signal d'horloge toutes les P impulsions d'un signal d'horloge maître, N et/ou P étant produit aléatoirement.

Ainsi, suivant les valeurs de M, N et P définit par le concepteur du circuit il est possible de contrôler la « fréquence » des impulsions fournies par le générateur d'horloge aléatoire.

Selon un mode de réalisation préféré, P peut être égal à M, et N peut être produit aléatoirement. N peut être compris entre une valeur minimale et une valeur maximale. Le nombre N peut être obtenu en sortie d'un additionneur ou d'un additionneur/soustracteur recevant d'une part une valeur moyenne de N et d'autre part une valeur aléatoire de correction à additionner ou éventuellement à soustraire de cette valeur moyenne. Le générateur de nombre comprend un registre à décalage non linéaire et un générateur de nombre aléatoire, ledit générateur de nombre aléatoire servant à réinitialiser périodiquement le registre à décalage non linéaire. La valeur aléatoire de correction peut alors être fournie à partir du registre à décalage non linéaire.

La description qui suit aidera à mieux comprendre la mise en œuvre de l'invention, cette description faisant référence aux figures annexées parmi lesquelles :
- La figure 1 représente un mode de réalisation préféré de l'invention,
- La figure 2 montre un mode de réalisation d'un réducteur de fréquence tel qu'utilisé dans l'invention,
- La figure 3 est un exemple de table de correspondance telle qu'elle peut être utilisée dans l'invention,
- La figure 4 montre les trains d'impulsions résultant du circuit réducteur de fréquence,
- La figure 5 montre un mode de réalisation préféré d'un générateur de nombre aléatoire établi dans une gamme de valeurs contrôlées,
- La figure 6 montre un exemple de générateur de nombre aléatoire.

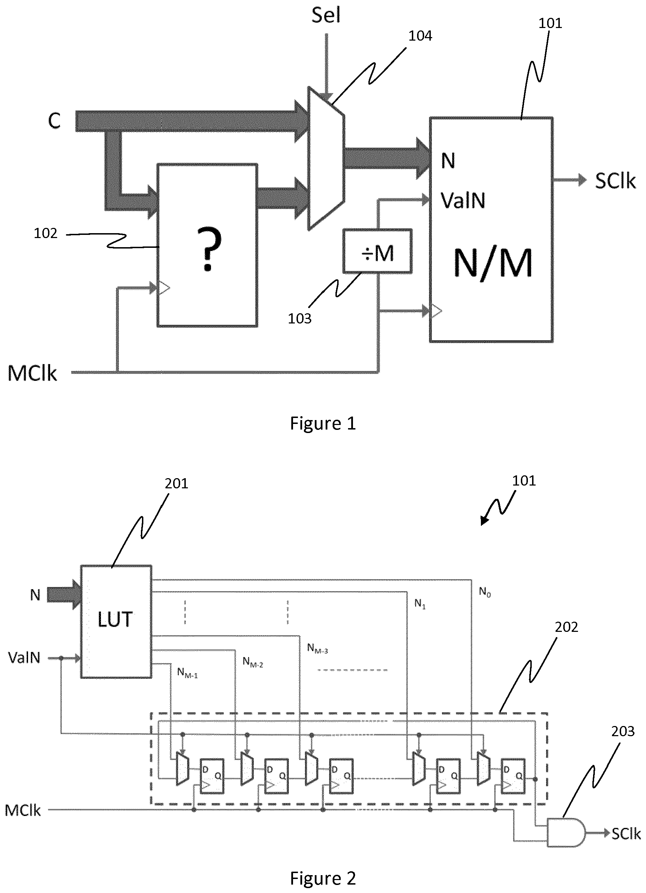

Le circuit de génération d'horloge de la figure 1 correspond à un mode préféré de réalisation de l'invention. Selon le mode préféré de réalisation, ce générateur d'horloge fonctionne en mode réducteur d'horloge et en mode génération d'horloge aléatoire tout en garantissant une fréquence moyenne. Ce circuit de génération d'horloge est préférentiellement intégré sur la même puce que le processeur sur lequel on souhaite masquer le cadencement. Dans l'exemple préféré, il a été choisit de partir d'un signal d'horloge primaire MClk et de le transformer en signal d'horloge transformé SClk. Ce choix est fait car il est possible et même recommandé d'utiliser simultanément sur le circuit intégré l'horloge primaire MClk et le signal d'horloge transformé SClk afin de masquer un peu plus le cadencement par le signal d'horloge transformé SClk. Ainsi la production du signal d'horloge, primaire MClk n'est pas représentée mais elle peut être obtenue par n'importe quel type de circuit oscillateur connu de l'homme du métier. A titre d'exemple, un oscillateur en anneau réalisé sur le même circuit intégré peut convenir.

Le circuit de génération d'horloge de la figure 1 comporte principalement un circuit réducteur d'horloge 101 et un générateur de nombre 102. Le circuit réducteur d'horloge 101 reçoit le signal d'horloge primaire MClk et fournit le signal d'horloge transformé SClk. Le principe du circuit réducteur d'horloge 101 est de ne laisser passer que N impulsions d'horloge sur M cycles d'horloge avec N compris entre 1 et M, le nombre N étant fournit sur une entrée du circuit réducteur d'horloge 101. Le générateur de nombre 102 fournit un nombre aléatoire N servant à paramétrer le circuit réducteur d'horloge 101. Dans l'exemple préféré le paramétrage se fait tous les M cycles d'horloge à l'aide d'un circuit diviseur de fréquence 103 qui valide le nombre N tous les M cycles d'horloge sur une entrée de validation VaIN du circuit réducteur d'horloge 101. Le nombre aléatoire N est fournit par le générateur de nombre 102 au circuit réducteur d'horloge 101 à l'aide d'un multiplexeur 104 qui permet de sélectionner un mode de fonctionnement aléatoire ou un mode non aléatoire en utilisant un signal de sélection Sel. Le multiplexeur 104 peut donc fournir soit un nombre aléatoire soit un nombre de consigne C qui peut être fournit par un autre circuit.

Comme l'aura compris l'homme du métier, le multiplexeur 104 n'est pas essentiel pour l'invention et sert uniquement à fournir un moyen de contrôle de mise en service de l'invention. Il est tout à fait possible de supprimer le multiplexeur 104 en reliant directement la sortie du générateur de nombre 102 à l'entrée du circuit réducteur d'horloge 101. Le circuit fonctionnera alors toujours en mode aléatoire.

Le circuit diviseur de fréquence 103 est utilisé pour simplifier la commande de changement de nombre N. En effet, le côté aléatoire vient du changement du nombre N en le remplaçant par un autre assez souvent afin qu'il ne soit pas possible de prédire ou de retrouver facilement le signal d'horloge transformé SClk à partir d'une observation du courant. Le choix de changer le nombre tous les M cycles revient à utiliser de manière optimum le circuit réducteur d'horloge 101 qui propose en sortie de ne garder que N impulsions sur M.

En variante, il est possible de changer la valeur de N de manière périodique tous les P cycles avec P différent de M mais cela n'optimiserait pas l'utilisation du circuit réducteur d'horloge 101. Ce changement de nombre pourrait également se faire aléatoirement. Dans ce cas, un générateur aléatoire fournirait une impulsion tout les P cycles avec P un nombre aléatoire et un deuxième générateur fournirait N de manière aléatoire ou prédictible. La valeur N serait chargée aléatoirement dans le circuit réducteur d'horloge 101. L'homme du métier comprendra qu'il est plus simple d'utiliser le mode de réalisation préféré tel que montré sur la figure 1.

Afin de pouvoir mieux expliquer le fonctionnement de l'invention, il convient de détailler le fonctionnement des éléments principaux de l'invention. La figure 2 montre un exemple de réalisation du circuit réducteur d'horloge 101 qui est par exemple réalisé autour d'une table de correspondance 201 et d'un registre à décalage 202. La table de correspondance comporte un bus d'entrée pour recevoir le nombre N, l'entrée de validation VaIN permet d'échantillonner la valeur N du bus afin de fournir sur M sorties N₀ à N_{M-1} les valeurs d'états mémorisées à l'adresse correspondant au nombre N. Les M sorties N₀ à N_{M-1} de la table de correspondance sont reliées à des entrées parallèles du registre à décalage 202 et l'entrée de Validation VaIN sélectionne le mode de fonctionnement du registre à décalage. Le registre à décalage est synchronisé sur le signal d'horloge primaire MClk. Lorsque le signal de l'entrée de validation VaIN est actif alors les valeurs fournies sur les M sorties N₀ à N_{M-1} de la table de correspondance 201 sont transférées dans le registre à décalage 202. Lorsque le signal de l'entrée de validation VaIN est inactif, le registre décale son contenu d'une bascule vers la droite, la sortie de la dernière bascule du registre 202 étant réinjectée en entrée la première bascule du registre 202. Une porte ET 203 reçoit d'une part la sortie de la dernière bascule du registre à décalage 202 et, d'autre part, le signal d'horloge primaire MClk. La sortie de la porte ET 203 fournit le signal d'horloge transformé SClk.

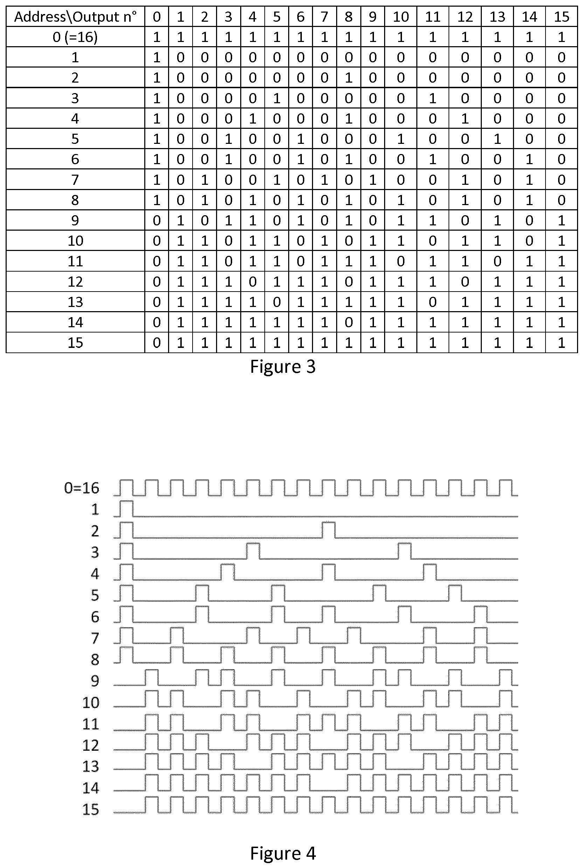

La figure 3 est un exemple de contenu de la table de correspondance 201 pour une valeur de M égale à 16. La valeur N codée sur 4 bits est comprise entre 0 et 15 cependant, la valeur 0 correspond ici à la valeur 16 à laquelle le 5^{eme} bit de poids fort a été retiré. Pour illustrer le fonctionnement du circuit réducteur d'horloge, la figure 4 montre le signal d'horloge transformé pour chaque valeur de N, avec M toujours égal à 16. L'homme du métier comprendra qu'agir sur le signal d'horloge en supprimant des impulsions revient au même que de changer la fréquence dudit signal d'horloge.

Changer aléatoirement la valeur de N tous les M cycles revient à changer aléatoirement l'ordre de succession des lignes d'impulsions représentées sur la figure 4. Ainsi, une mesure de courant de consommation d'un circuit en partie synchronisé par une horloge transformée SClk verrait des chutes de consommation dispersées aléatoirement dans le temps et qu'il n'est pas possible de prévoir. Ces chutes de courant interférant avec l'analyse d'un algorithme, il est plus difficile d'analyser l'algorithme que l'on essaie d'espionner. En outre, le caractère imprévisible de la présence ou de l'absence de la prochaine impulsion rend très difficile toute tentative de changement de valeur dans un registre pendant le fonctionnement.

Avec un tel circuit, la valeur N pouvant être comprise entre 1 et M, le nombre d'impulsions actives du signal d'horloge transformé SClk peut être au plus divisé par M par rapport au nombre d'impulsions du signal d'horloge primaire MClk. La vitesse de traitement est certes réduite mais d'une valeur maximale contrôlable.

Considérant que l'augmentation de M risque de réduire proportionnellement la vitesse de traitement, un mode préféré consiste à faire varier la valeur de N dans une gamme de valeurs inférieure à la valeur de M. Par exemple si N ne varie qu'entre M/2 et M, la vitesse de traitement sera au plus divisée par deux par rapport à la vitesse maximale de traitement. L'augmentation de la valeur de M permet alors d'augmenter l'entropie sur le caractère aléatoire de l'horloge sans toutefois nuire aux performances. Un mode de réalisation assez simple consiste à faire varier de manière aléatoire que les bits de poids faible de la valeur N tout en conservant le bit de poids fort à 1.

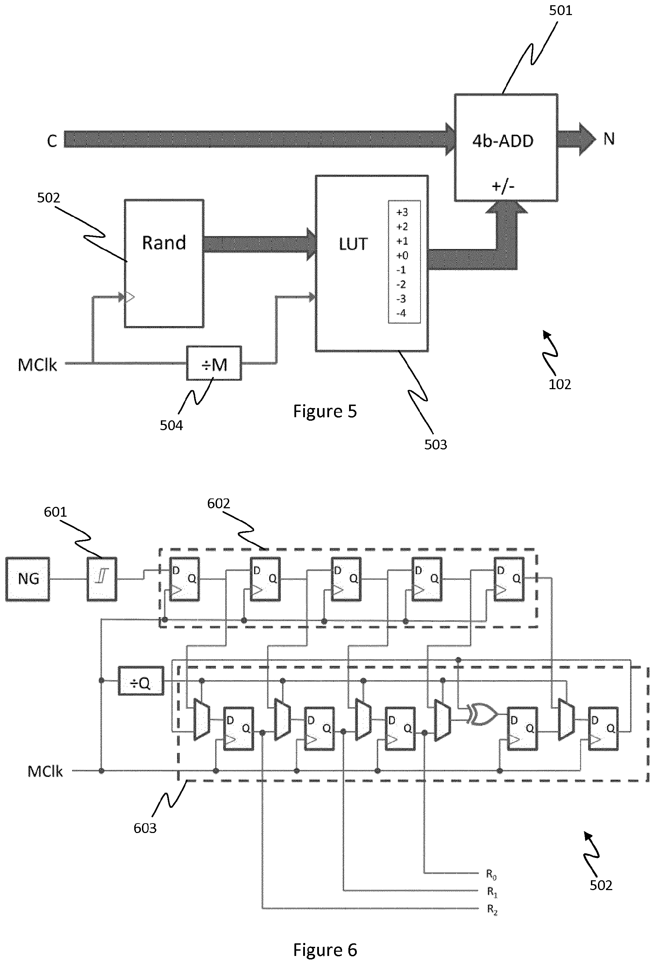

Selon un mode de réalisation préféré, le nombre d'impulsions peut être contrôlé afin d'avoir une possibilité d'agir sur l'entropie et la vitesse de cadencement. A cet effet et à titre d'exemple préféré, il est proposé le circuit générateur de nombre 102 de la figure 5. Le générateur de nombre 102 comporte un additionneur 501, un générateur aléatoire 502 et un circuit de mise en forme 503. Restant avec M=16, l'additionneur 501 est un additionneur 4 bits qui reçoit d'une parte une valeur de consigne C et d'autre part un nombre aléatoire fournit par le circuit de mise en forme 503. Le générateur aléatoire 502 fournit un nombre aléatoire sur 3 bits au circuit de mise en forme. La sortie de l'additionneur 501 fournit le nombre N sur 4 bits. Le circuit de mise en forme 503 est par exemple une table de correspondance qui va transformer un nombre aléatoire codé sur 3 bits en entier signé sur 4 bits afin de pouvoir additionner ou soustraire le nombre aléatoire à la valeur de consigne C. L'échantillonnage du nombre aléatoire à l'entrée du circuit de mise en forme 503 doit se faire à la même fréquence de cadencement que l'échantillonnage de la valeur N en entrée de du circuit réducteur d'horloge 101. Un circuit diviseur de fréquence 504 A titre indicatif, l'homme du métier comprendra que N étant codé sur 4 bits et pouvant additionner 3 ou soustraire 4 à la valeur de consigne C, alors il convient d'avoir 4 < C < M-3.

Un tel circuit permet d'avoir un contrôle de la valeur N assez fin, il est ainsi possible de contrôler d'une part la valeur moyenne de N et d'autre part la valeur minimale Nₘᵢₙ et la valeur maximale N_{Max} de N. Pour garantir une vitesse de cadencement minimale, il suffit de fixer le ratio Nₘᵢₙ/M à une valeur la plus grande possible. Préférentiellement, on essaiera d'avoir ce ratio Nₘᵢₙ/M supérieur ou égal à 1/2. D'autre part, la différence N_{Max}-Nₘᵢₙ permet de contrôler l'entropie du caractère aléatoire, plus cette différence N_{Max}-Nₘᵢₙ est grande plus l'entropie est importante. L'homme du métier choisira des valeurs de N, Nₘᵢₙ, N_{Max} et M adaptées à son besoin.

A titre indicatif, un exemple de générateur de nombre aléatoire 502 est représenté sur la figure 6. Un générateur de bruit NG fournit un signal analogique difficilement prédictible à un circuit à déclenchement 601. Le circuit à déclenchement 601 est par exemple un trigger de schmitt qui fournit en sortie un signal logique ayant une valeur 0 ou 1 suivant la valeur du signal analogique. Le signal logique change d'état au bout d'une durée qui est aléatoire. Ainsi, lors de chaque front actif du signal d'horloge primaire MClk, la valeur du signal logique est soit à 0 soit à 1 de manière non prédictible.

Un registre à décalage 602 reçoit sur une entrée de sérialisation ledit signal logique de sorte que le registre 602 se remplisse aléatoirement de 0 ou 1 logique de manière aléatoire. Le contenu du registre à décalage forme un nombre logique aléatoire qui change à chaque cycle de l'horloge primaire MClk. Selon un premier mode de réalisation, le générateur de nombre aléatoire peut se limiter à ce qui est décrit précédemment.

Cependant, un inconvénient du circuit précédent est que parfois le signal logique fournit une succession de valeur 0 ou 1 pendant un certain temps. On se retrouverait alors avec une succession de nombres aléatoires qui seraient inchangés. Afin d'éviter d'avoir en sortie deux nombres aléatoires identiques de manière successive, il est préféré de rajouter un registre à décalage non linéaire 603 dans lequel on transpose le contenu du registre 602, par exemple tous les Q cycles. Ainsi si le circuit à déclenchement 601 fournit une suite de bit trop répétitive, celle-ci sera changée par le registre à décalage non linéaire 603. Afin de récupérer un mot aléatoire, on extrait sur une sortie parallèle du registre le nombre de bits dont on à besoin R₀, R₁ et R₂. Le mot R₀₋₂ correspond au mot de sortie du générateur aléatoire 502.

L'homme du métier pourra à loisir utiliser le générateur décrit selon l'une des variantes décrites ou suggérées dans un circuit nécessitant un certain niveau de sécurité et pour lequel on souhaite masquer ce qui est effectivement réalisé par un processeur. A titre indicatif, pour un circuit multiprocesseur, plusieurs générateurs peuvent être utilisés afin de masquer le plus possible le cadencement de chaque processeur.

## Revendications

1. Générateur d'horloge aléatoire qui comporte :
- une entrée de signal d'horloge recevant un signal d'horloge maître (MClk) constitué d'une série d'impulsions régulières et régulièrement espacées,
- un circuit réducteur (101) de signal d'horloge recevant d'une part le signal d'horloge maître et d'autre part un nombre entier N et fournissant un signal de sortie correspondant à un train de N impulsions toutes les M impulsions d'horloges, M étant un nombre entier supérieur à 1 et N étant un nombre entier supérieur à 1 et inférieur ou égal à M,
**Caractérisé en ce qu'**il comporte en outre :
- Un générateur de nombre (102, 103) qui fournit un nouveau nombre N au circuit réducteur de signal d'horloge toutes les P impulsions d'un signal d'horloge maître, N et/ou P étant produit aléatoirement.

2. Générateur selon la revendication 1, dans lequel P est égal à M et N est produit aléatoirement.

3. Générateur selon la revendication 1, dans lequel le générateur de nombre (102) comprend un registre à décalage non linéaire (603) et un générateur de nombre aléatoire (NG, 601, 602), ledit générateur de nombre aléatoire servant à réinitialiser périodiquement le registre à décalage non linéaire.

4. Générateur selon la revendication 1 dans lequel N est compris entre une valeur minimale (Nₘᵢₙ) et une valeur maximale (N_{Max}).

5. Générateur selon la revendication 4, dans lequel le nombre N est obtenu en sortie d'un additionneur (501) ou d'un additionneur/soustracteur recevant d'une part une valeur moyenne (C) de N et d'autre part une valeur aléatoire de correction (R₀₋₂) à additionner ou éventuellement à soustraire de cette valeur moyenne.

6. Générateur selon les revendications 3 et 5, dans lequel la valeur aléatoire de correction est fournie à partir du registre à décalage non linéaire.

## Patentansprüche

1. Zufalls-Taktgenerator, der Folgendes beinhaltet:
- einen Taktsignaleingang, der ein Master-Taktsignal (MCIk) empfängt, das aus einer Reihe von regelmäßigen und regelmäßig beabstandeten Impulsen besteht,
- eine Taktsignal-Reduktionsschaltung (101), die einerseits das Master-Taktsignal und andererseits eine ganze Zahl N empfängt und ein Ausgangssignal bereitstellt, das einer Reihe von N Impulsen und allen M Taktimpulsen entspricht, wobei M eine ganze Zahl größer als 1 ist und N eine ganze Zahl größer als 1 und kleiner als oder gleich M ist,
**Dadurch gekennzeichnet, dass** es außerdem Folgendes beinhaltet:
- Einen Zahlengenerator (102, 103), der der Taktsignalreduzierschaltung eine neue Zahl N liefert, wobei alle P-Impulse eines Master-Taktsignals, N und/oder P zufällig erzeugt werden.

2. Generator nach Anspruch 1, wobei P gleich M ist und N zufällig erzeugt wird.

3. Generator nach Anspruch 1, wobei der Zahlengenerator (102) ein nichtlineares Schieberegister (603) und einen Zufallszahlengenerator (NG, 601, 602) umfasst, wobei der Zufallszahlengenerator verwendet wird, um das nichtlineare Schieberegister periodisch zurückzusetzen.

4. Generator nach Anspruch 1, bei dem N zwischen einem Minimalwert (Nₘᵢₙ) und einem Maximalwert (N_{Ma}x)- liegt.

5. Generator nach Anspruch 4, wobei man die Zahl N am Ausgang eines Addierers (501) oder eines Addierers/Subtrahierers erhält, der einerseits einen Mittelwert (C) von N und andererseits einen zufälligen Korrekturwert (R_{0.2}) erhält, der zu diesem Mittelwert addiert oder gegebenenfalls von ihm subtrahiert wird.

6. Generator nach den Ansprüchen 3 und 5, wobei der Zufallskorrekturwert aus dem nichtlinearen Schieberegister ausgegeben wird.

## Claims

1. Random clock generator which comprises:
- a clock signal input which receives a master clock signal (MClk) consisting of a series of regular and regularly spaced pulses,
- a clock signal reduction circuit (101) which receives the master clock signal and an integer N and provides an output signal corresponding to a train of N pulses every M clock pulses, M being an integer greater than 1 and N being an integer greater than 1 and less than or equal to M,
**characterized in that** it also comprises:
- a number generator (102, 103) which provides a new number N to the clock signal reduction circuit every P pulses of a master clock signal, N and/or P being randomly produced.

2. Generator according to claim 1, wherein P is equal to M, and N is randomly produced.

3. Generator according to claim 1, wherein the number generator (102) comprises a non-linear shift register (603) and a random number generator (NG, 601, 602), said random number generator being used to periodically reset the non-linear shift register.

4. Generator according to claim 1, wherein N is between a minimum value (Nₘᵢₙ) and a maximum value (N_{Ma}x).

5. Generator according to claim 4, wherein the number N is obtained at the output of an adder (501) or an adder/subtractor which receives an average value (C) of N and a random correction value (R₀₋₂) to be added to or possibly subtracted from this average value.

6. Generator according to claims 3 and 5, wherein the random correction value is provided by the non-linear shift register.
